# EUROPEAN PATENT SPECIFICATION

(11) **EP 1 809 755 B1**
(45) Date of publication and mention of the grant of the patent: **08.07.2009**
(21) Application number: 04797135.3
(22) Date of filing: 09.11.2004
(51) Int. Cl.: C12P 7/62, C12P 7/64, C11B 13/00, C11B 13/02

(54) **BIODIESEL PRODUCTION FROM SOAPSTOCK**
HERSTELLUNG VON BIODIESEL AUS SEIFENAUSGANGSMATERIAL
PRODUCTION DE BIODIESEL A PARTIR DE SOAPSTOCK

(43) Date of publication of application: 25.07.2007
(73) Proprietor: Cognis IP Management GmbH, 40589 Düsseldorf (DE)
(72) Inventor: SATO, Setsuo, Avenida Estevan Corbani, Jardim Santa Maria, CEP-Jacareí, SP (BR); BUENO DE ALMEIDA, Wanderson, CEP-12216-590 Sao Jose dos Campos-SP (BR); ARAUJO, Alexander Shigueru, 12237-000 Sao José dos Campos-SP (BR)
(86) International application number: PCT/BR2004/000218
(87) International publication number: WO 2006/050589

(56) References cited:
- US-A- 5 713 965
- US-A1- 2003 158 074
- US-B1- 6 398 707
- HAAS ET AL: "Combined Nonenzymatic-Enzymatic Method for the Synthesis of Simple Alkyl Fatty Acid Esters from Soapstock" JOURNAL OF THE AMERICAN OIL CHEMISTS' SOCIETY, AMERICAN OIL CHEMISTS' SOCIETY, CHAMPAIGN, IL, US, vol. 73, no. 11, 1997, pages 1393-1401, XP002147540 ISSN: 0003-021X
- SHIMADA Y ET AL: "CONVERSION OF VEGATABLE OIL TO BIODIESEL USING IMMOBILIZED CANDIDA ANTARCTICA LIPASE" JOURNAL OF THE AMERICAN OIL CHEMISTS' SOCIETY, AMERICAN OIL CHEMISTS' SOCIETY, CHAMPAIGN, IL, US, vol. 76, no. 7, 1999, pages 789-793, XP002933211 ISSN: 0003-021X
- KAIEDA M ET AL: "BIODIESEL FUEL PRODUCTION FROM PLANT OIL CATALYZED BY RHIZOPUS ORYZAE LIPASE IN A WATER-CONTAINING SYSTEM WITHOUT AN ORGANIC SOLVENT" JOURNAL OF BIOSCIENCE AND BIOENGINEERING, ELSEVIER, AMSTERDAM,, NL, vol. 88, no. 6, 1999, pages 627-631, XP002936752 ISSN: 1389-1723
- HAAS M J: "Improving the economics of biodiesel production through the use of low value lipids as feedstocks: vegetable oil soapstock" FUEL PROCESSING TECHNOLOGY, vol. 86, no. 10, 25 June 2005 (2005-06-25), pages 1087-1096, XP004907229 ISSN: 0378-3820
- USTA N ET AL: "Combustion of biodiesel fuel produced from hazelnut soapstock/waste sunflower oil mixture in a Diesel engine" ENERGY CONVERSION AND MANAGEMENT, ELSEVIER SCIENCE PUBLISHERS, OXFORD, GB, vol. 46, no. 5, March 2005 (2005-03), pages 741-755, XP004678773 ISSN: 0196-8904
- GHOSH S. ET AL: "Utilization of acid oils in making valuable fatty products by microbial lipase technology" JOURNAL OF THE AMERICAN OIL CHEMISTS' SOCIETY, vol. 72, no. 12, December 1995 (1995-12), pages 1541-1544, Champaign, US

## Description

### FIELD OF INVENTION

This invention relates to a process which produces alkyl fatty acid esters and preferable methyl and ethyl fatty acid esters via enzymatic catalysis using as feed soapstock waste generated by the vegetable oil refineries during the alkali refining process to produce edible oils. The combination of this technology with feedstock availability offers an economic and competitive approach to produce biodiesel or raw material for the chemical industry. Additionally a new source of sterols is available for the food industry. Converting byproducts from renewable sources into more added value products using biotechnology is another real case of contribution from the chemical industry using more environmental friendly practices.

### STATE OF THE ART

For each metric ton of alkali refined vegetable produced in the world approximately 30kg of soapstock is generated. There is a high potential source of raw material since vegetable oil production is growing, specially soybean in Brazil.

Soapstock waste has been used mostly as animal feed, raw material for soap makers, and feed stock for fatty acid production. The existent patents and commercial processes to make fatty acids from soapstock always refers to hydrolysis and acidification steps using strong acids such as sulfuric or hydrochloridic acids, producing a mixture of fatty acids, inorganic salts, water, and other small components such as glycerin, phospholipides. Due to the nature of this complex mixture separation of the crude fatty acids layer representing the organic phase from the aqueous phase is difficult demanding most of the time steps such as water washing, settling out, centrifuging, and filtration to separate the other components from the fatty acids. Some novelty has been introduced lately, for instance, the use of potassium soaps which generates lower viscosity feedstock, one of the biggest problem with sodium soaps, as described in the US patent 20030236422. Another patent disclosing procedure to make fluid soapstock is described in the US patent 5,156,879. The invention is directed to a method for treatment of soapstock obtained by alkali refining of fats to provide a fluid, uniform, pumpable animal feed product. In the method, a raw soapstock is provided. The soapstock is pretreated by adding a strong, soluble base to the soapstock. Propionic acid is then added to the pretreated soapstock and the pH is adjusted to provide an acidified soapstock. With soapstocks having low gum levels, a fluid, uniform, pumpable product is provided without further treatment. At higher gum levels, the pretreated soapstock and/or the acidified soapstock is heated to a predetermined temperature to provide the fluid, uniform, pumpable product

The US patent 6,475,758 disclose the use of an endogenic bacteria to acidulate soapstock. It is advantageously acidified by fermentation of endogenous soapstock nutrients and added nutrients under controlled conditions using acidogenic bacteria. The nutrients may include carbohydrate, nitrogen, phosphorous, sulfur from defined or undefined sources. The acidification reaction avoids the use of strong acids for the treatment of soapstock, minimizes wastewater contamination with salts and produces potentially valuable by-products including lactic acid, acetic acid, glyceric acid and nutrient rich microorganisms.

All the above mentioned processes end up with a dark color crude fatty acids having residual moisture and other small components. Drying and distillation steps usually are necessary to produce commercial fatty acids to be sold in the marketplace or to use it as esterification feed because impurities is known to lower esterification reaction speed.

### SUMMARY OF INVENTION

The present invention relates to a compact and more environmentally fatty acid esterification production process to make alkyl and mainly methyl and ethyl esters starting directly from soapstock waste. The benefit of this process is the use of enzymes as esterification catalysts able to convert the free fatty acids into esters in the presence of water, salts, soaps, and many other impurities. This initial step is key for the economics of the commercial scale processes, because the esters has much lower viscosities and solidification point than their respective fatty acids making easier the separation of organic and aqueous phases. The lower interaction between aqueous and organic phases compared to fatty acids also facilitate the purification process. This facile separation makes this step more productive demanding less process steps, just settling out the mixture is enough to separate the two phases. The water phase rich in sodium sulfate separated from the process via filtration or any other suitable method can be used as raw material in the paper mill industry during the delignification step using the sulfate Kraft process. Enzymatic catalyst using a liquid Lipase preferably *Candida antartica* Lipase B surprisingly was much more effective than running a pure fatty acid esterification. This unbiguous result would be explained by the fact that some impurities may be playing as surfactants for the system. After complete aqueous phase separation the residual free fatty acids in the organic phase is neutralized with alkaline solution, neutralization water is separated by decanting or via degassing system during the further distillation step producing a light colored esters. The residue from the distillation step representing about 15% in weight is rich in sterols which can be recovered using known processes for instance US 6,281,373 B1

### BRIEF DESCRIPTION OF THE DRAWINGS

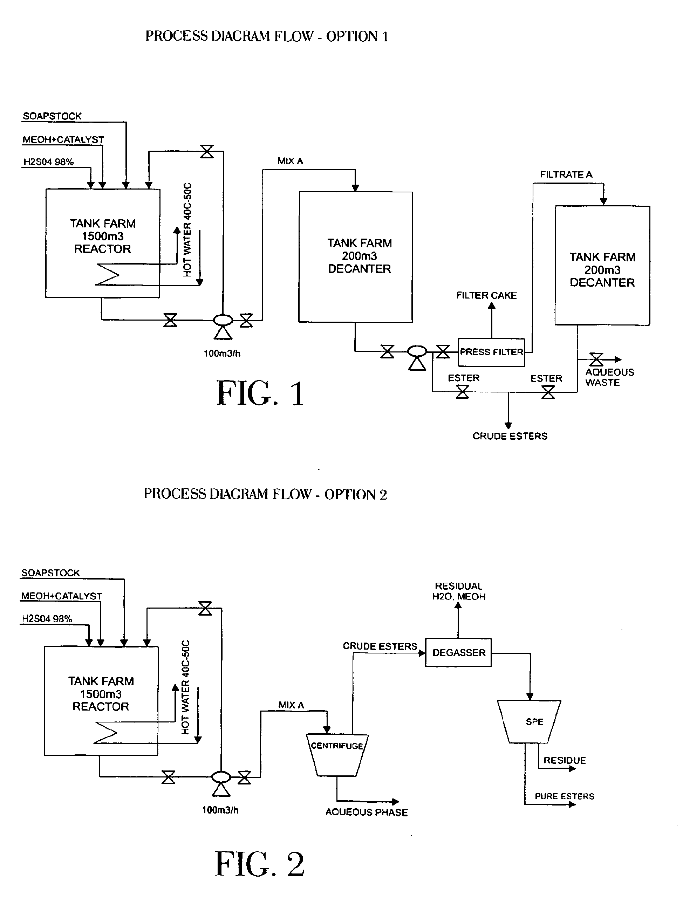

Figures 1 and 2 show two possible process diagrams of the claimed process.

### DETAILED DESCRIPTION OF THE INVENTION

Other than in the operating examples, or where otherwise indicated, all numbers expressing quantities of ingredients or reaction conditions used herein are to be understood as modified in all instances by the term "about".

The subject of the invention is a process for production of fatty acid esters directly from any soapstock generated in the alkali refining process which contains 10-60% water, 0,1-2,0% of sterols, 35-85% of fatty derivatives including partial glycerides, by
➢ neutralizing and splitting the soaps with strong acids until reaching pH 2-8,
➢ followed by enzymatic esterification using Lipase with concentration ranging from 100 ppm - 10% by weight, using C1 to C6 alkanol in a weight ratio of 5-100% in relation to the fatty components working at temperature from 15-70°C via batch or continuous processes,
➢ the mixture is agitated mechanically or just by circulation during three to five days at temperature from 15-70°C. Acid value is measured in the organic layer along the days. Reaction is stopped when acid value does not decrease after 24 hours,
➢ to separate the ester phase the mixture would be settled out, pumped to a centrifuge, or solids is filtered out to facilitate the separation,
➢ the residual acid value from the incomplete enzymatic esterification is neutralized using alkali solution selected from the group consisting of Sodium, Potassium, Calcium, Aluminium, Lithium alkali solutions or ammonium hydroxide and their derivatives such as organic amines,
➢ the crude esters is distilled off using batch technique or continuous flash distillators, residual amount of moisture or methanol is stripped off using a degasser just prior the main distillation still 80 to 90% of light color esters is produced continuously.

Soapstocks usually has 10 - 60% of water coming from alkali neutralization, and most refineries add extra water to make the soaps pumpable, the remaining part is composed by fatty acid soaps itself, 0,1 - 2% sterols, presence of mono-, di- and triglycerides and also low level of phospholipides. Some feedstock should also contain proteins coming from the extraction process which would end up as a solid material in the process.

In a preferred embodiment the invention deals with a process where the soapstocks from alkali refining is selected from the group consisting of soybean, sunflower, rice, corn, coconut, palm kernel, rapeseed or cotton and where the acids used to split the soaps are strong acids like sulfuric acid or hydrochloridic acids and the preferred pH is pH 3,5-6 most preferable pH 5.

After neutralization alkanol, preferred methanol or ethanol is added to the mixture followed by the specific enzyme. Acid value is measured in the organic layer separated in a lab centrifuge.

Another preferred embodiment are the possible Lipases to be used in teh process which are produced by an organism selected from the group consisting of *Aspergillus niger, Aspergillus oryzea, Bacillus species, Candida albicans, Candida antarctica, Candida cylindracea, Candida glabrata, Candida maltosa, Candida parapsilosis, Candida lipolytica, Candida tropicalis, Candida viswanathii, Chromobacterium viscosum, Geotrichum candidum, Issatchenkia orientalis (Candida krusei), Kluyveromyces marxianus (C. kefyr, C. pseudotropicalis), Mucor javanicus, Penicilium camenberti, Penicilium roqueforti, Pichia guilliermondii (Candida guilliermondii), Porcine pancreas, Pseudomonas cepacia, Pseudomonas fluorescens, Rhizomucor miehei, Rhizopus arrhizus, Rhizopus oryzae, Rhizopus niveus, Rhizopus javanicus* and *Thermomyces lanugenosus* and mixtures thereof each in the form of liquid, bulk or immobilisied. It is also preferred that the Lipase is a Lipase of type B preferable a *Candida antarctica* Lipase B. The preferred concentration for the Lipases ranges from 100 ppm to 10 % and most preferred is 500 ppm.

A further preferred embodiment of the invention relates to the alkanols to be esterified. The preferable alkanol is a linear or branched C1 to C6 alkanol, preferred C1 Methanol or C2 Ethanol using batch or continuous technique.

The mixture is agitated mechanically or just by circulation during three to five days at temperatures from 15-70°C preferred at room temperature or preferable at 40-60°C and most preferable at 30 - 45°C. Acid value is measured in the organic layer along the days. Reaction is stopped when acid value does not decrease after 24 hours. Usually esterification yield is 80 to 90%. Separation between organic and aqueous phase will become easier as esterification increases.

After esterification gets flat condition, the agitation or circulation is stopped. To separate the ester phase the mixture woul be settled out, pumped to a centrifuge, or solids is filtered out to facilitate the separation.

The residual acid value from the incomplete enzymatic esterification is neutralized using alkali solution.

In a further preferred embodiment of the invention the distillation step is carried out by batch or continuous operation preferable by a thin film or wipped film evaporator and that a continuous distillation is operated at 180°C - 240°C at 1-10 mmhg pressure, preferable 220°C at 3 mmhg.

The crude ester is distilled off using batch technique or continuous flash distillators such as thin film or wipped film evaporators. Residual amount of moisture or methanol is stripped off using a degasser just prior the main distillation still. 80 to 90% of light color esters is produced continuosly.

The residue coming from the still dark in color has about 5 to 8% of sterols, with the remaining part as fatty material. Sterols and fatty acids can be recovered using the same equipments using technologies described in the patents US 6,281,373 B1

This process will make possible the use of soapstock in more added value applications, other than conventional animal feed and soap makers.

The advantage of the process just described are:
1) the use of enzyme catalysis able to run esterification in the presence of high amount of water and presence of other components other than fatty material
2) esterification at low temperatures simplify process and equipments. This gives this process high flexibility allowing the use of existent plants with minor changes. For new plants capital investment is considerable lower
3) the easy separation of the aqueous phase and other impurities increases dramatically the process yield compared to the fatty acid process. As consequence less waste is generated in this process. The water waste from the process rich in sodium sulfate can be recovered in the sulfate Kraft process used in the paper mill industry.
4) Sterols, a raw material with increased demand nowadays is recovered in this process, this would change dramatically the availability of this raw material around the world.
5) Process simplicity would allow the existence of small esters production plants near to the oil refineries saving a lot of handling and transportation cost
6) Biodiesel for the tank wagons used to transport oils and grains would be produced in that way, in addition to conventional esters application for the chemical industry.

One of the key point of this process is to get the right quality soapstocks. Less water is better for the process, but water is necessary to make soap pumpable. Methanol adding in the pipeline just after the refining centrifuge reduce dramatically the viscosity meaning no need of extra water addition. Another approach is to use potassium or lithium during refining which gives lower viscosity for the soapstock.

The ratio by weight of soapstock fatty material and C1 and C2 alkanol is from 10:2 to 10:0,7 preferably 10:1,5.

The ratio by weight of fatty material from soapstock and enzymes is 10:0,001 to 0,200, preferable 10:0,005.

The water amount in the soapstock is 10 to 60%, preferably lower than 40%

The distillator temperature in the wiped film evaporator is preferably in the range of 200-225°C., with a pressure of from 1 to 5 Torr.

Another subject of the invention is a process for the production of biodiesel comprising the process according to any of claims 1 - 8.

### EXAMPLES

### Example 1.1

100 kg of soapstock with 40% of water, fatty part composed by 95,2% of fatty acids as soaps, 1,2% of monoglycerides, 1,5% of diglycerides, 1,1% of triglycerides, and 1,0% of sterols, measured by Gel permeation technique was neutralized with 8,7kg of sulfuric acid 98% at 45C until PH 4,0. 9,0 kg of Methanol was added followed by 0,03kg of liquid enzyme CALB - *Candida antartica* Lipase B from Novozymes. Mixture was kept under circulation using a diafragm pump 100 liter/hour flow rate during 6 days. Initial Acid value for the organic phase was 155 and decreased as described in the Table 1. External temperature ranged 24°C to 30°C over the 6 days.

**Table 1: Acid value over 6 days**

| **days** | **AV mgkoh/g** |
|---|---|
| 0 | 154 |
| 1 | 105 |
| 2 | 76 |
| 3 | 61 |
| 4 | 48 |
| 5 | 38 |
| 6 | 32 |

### Example 1.2

Circulation was stopped and mixture was settled out for 8 hours. About 49 kg of crude methyl esters was separated from 68,9 kg of an aqueous phase including a layer of a emulsion. The aqueous phase was filtered out through a press filter producing 11 kg of filtration cake. The filtered liquor was settled down for additional 3 hours separating 2,3 kg of crude methyl esters and 55,6 of a transparent aqueous phase which was discharged to sewer.

Total amount of crude methyl esters produced was 51,3kg with AV 25. About 1,8kg of sodium hydroxide 50% solution was added to neutralize the residual non esterified fatty acids.

Total amount after neutralization was 53,1 kg of neutralized crude esters for distillation.

### Example 1.3

The crude neutralized methyl esters was fed to a lab wiped film evaporator 0,13ft2 at 1kg/hour flow rate, still temperature was 220°C working with 1,5mmhg of pressure. A degasser 150C@5mmhg was assembled before the main still to remove residual water coming from the neutralization and methanol.

Forecut of 40 kg of pure fatty acid methyl esters Gardner 4, AV<2 was produced as a main product. Process yield was 40 % in relation to the soapstock and 71 % in relation to the total fatty material.

11,1 kg of a bottom stream having 8 % of sterols, partial glycerides, and fatty acid soaps was produced as residue. This material was processed according US 6,281,373 B1 to recover the sterols and the fatty acids as methyl esters again. The bottom stream could also be recycled back to the soapstock storage tank.

### Example 2.1

100 kg of soapstock from the same source as example 1.1 was neutralized with 8,7 kg of sulfuric acid 98% at 45°C until pH 4,0. 10,0 kg of Ethanol 96% was added followed by 0,03 kg of liquid enzyme CALB - *Candida antartica* Lipase B from Novozymes. Mixture was kept under circulation using a diafragm pump 80 liter/hour flow rate during 6 days. Initial Acid value for the organic phase was 150 and decreased to 38. External temperature ranged 22°C to 32°C over the 6 days.

### Example 2.2

Circulation was stopped and mixture was settled out for 6 hours. About 51 kg of crude methyl esters was separated from 68,9kg of an aqueous phase including a very small layer of an emulsion. The aqueous phase was filtered out through a press filter producing 11 kg of filtration cake. The filtered liquor was settled down for additional 3 hours separating 1,3kg of crude methyl esters and 55,2 of a transparent aqueous phase which was discharged to sewer. Total amount of crude ethyl esters produced was 52,0 kg with AV 38. About 3,0kg of sodium hydroxide 50% solution was added to neutralize the residual non esterified fatty acids.

Total amount after neutralization was 55,0 kg of neutralized crude esters for distillation.

### Example 2.3

The crude neutralized ethyl esters was fed to a lab wiped film evaporator 0,13ft2 at 1 kg/hour flow rate , still temperature was 230°C working with 1,0mmhg of pressure. A degasser 150C@5mmhg was assembled before the main still to remove residual water coming from the neutralization and ethanol.

Forecut of 42 kg of pure fatty acid methyl esters Gardner 4, AV<2 was produced as a main product. Process yield was 42% in relation to the soapstock and 74% in relation to the total fatty material.

10,0 kg of a bottom stream having 8,4% of sterols, partial glycerides, and fatty acid soaps was produced as residue. This material was processed according US patent US 6,281,373 B1 to recover the sterols. The bottom stream could also be recycled back to the soapstock storage tank.

### Example 3

1 kg of soapstock from the same source as example 1.1 was neutralized with 0,087 kg of sulfuric acid 98% at 45°C until pH 4,0. 0,10 kg of Ethanol 96% was added followed by 0,08 kg of the same enzyme adsorbed on a macroporous resin - Novozym 435. The mixture was kept under slow mechanical agitation reaching AV 20 from initial AV of 155 after three hours of reaction. Temperature was 35°C during the esterification time.

### Example 4

1 kg of soapstock from the same source as example 1.1 was neutralized with 0,087kg of sulfuric acid 98% at 45C until PH 4,0. 0,09 kg of methanol was added followed by 0,0005kg of liquid enzyme CALB - Candida Antartica Lipaze B from Novozymes. Mixture was kept under slow mechanical agitation Acid Value reached 18 from the initial 158 after 2 hours of reaction. Temperature was 30°C during the reaction time.

## Claims

1. A process for production of fatty acid esters directly from any soapstock generated in the alkali refining process which contains 10-60% water, 0,1-2,0% of sterols, 35-85% of fatty derivatives including partial glycerides, by
a) neutralizing and splitting the soaps with strong acids until reaching pH 2-8,
b) followed by enzymatic esterification using Lipase with concentration ranging from 100 ppm - 10% by weight, using C1 to C6 alkanol in a weight ratio of 5-100% in relation to the fatty components working at temperature from 15-70°C via batch or continuous processes,
c) the mixture is agitated mechanically or just by circulation during three to five days at temperature from 15-70°C. Acid value is measured in the organic layer along the days. Reaction is stopped when acid value does not decrease after 24 hours,
d) to separate the ester phase the mixture is settled out, pumped to a centrifuge, or solids is filtered out to facilitate the separation,
e) the residual acid value from the incomplete enzymatic esterification is neutralized using alkali solution selected from the group consisting of Sodium, Potassium, Calcium, Aluminium, Lithium or ammonium hydroxide and their derivatives such as organic amines,
f)the crude esters is distilled off using batch technique or continuous flash distillators, residual amount of moisture or methanol is stripped off using a degasser just prior the main distillation still 80 to 90% of light color esters is produced continuously.

2. A process according to claim 1, **characterized in that** the soapstock from alkali refining is selected from the group consisting of soybean, sunflower, rice, corn, coconut, palm kernel, rapeseed or cotton.

3. A process according to claim 1 or 2, **characterized in that** the acids used to split the soaps are strong acids like sulfuric acid or hydrochloridic acids and the preferred pH is pH 3,5-6 most preferable pH 5.

4. A process according to any of claim 1 to 3, **characterized in that** the Lipase is produced by an organism selected from the group consisting of *Aspergillus niger, Aspergillus oryzea, Bacillus species, Candida albicans, Candida antarctica, Candida cylindracea, Candida glabrata, Candida maltosa, Candida parapsilosis, Candida lipolytica, Candida tropicalis, Candida viswanathii, Chromobacterium viscosum, Geotrichum candidum, Issatchenkia orientalis (Candida krusei), Kluyveromyces marxianus (C. kefyr, C. pseudotropicalis), Mucor javanicus, Penicilium camenberti, Penicilium roqueforti, Pichia guilliermondii (Candida guilliermondii), Porcine pancreas, Pseudomonas cepacia, Pseudomonas fluorescens, Rhizomucor miehei, Rhizopus arrhizus, Rhizopus oryzae, Rhizopus niveus, Rhizopus javanicus* and *Thermomyces lanugenosus* and mixtures thereof each in the form of liquid, bulk or immobilisied.

5. A process according to claim 4, **characterized in that** the Lipase is a Lipase of type B preferable a *Candida antarctica* Lipase B.

6. A process according to any of claim 1 to 5, **characterized in that** the alkanol is a linear or branched C1 to C6 alkanol, preferred C1 Methanol or C2 Ethanol using batch or continuous technique.

7. A process according to any of claim 1 to 6, **characterized in that** the distillation step f) is carried out by batch or continuous operation preferable by a thin film or wipped film evaporator and that a continuous distillation is operated at 180°C - 240°C at 1-10 mmhg pressure, preferable 220°C at 3 mmhg.

8. A process according to any of claim 1 to 7, **characterized in that** the residue has 5 -8 % of sterols

9. A process for the production of biodiesel comprising the process according to any of claim 1 - 8.

## Patentansprüche

1. Ein Verfahren zur Herstellung von Fettsäureestern direkt aus jeder Seifengrundlage, hergestellt in einem alkalischen Veredelungsprozess und enthaltend 60 % Wasser, 0,1 bis 2,0 % Sterole, 35 bis 85 % von Fettderivaten einschl. Partialglyceriden durch
a) Neutralisation und Spaltung der Seifen mit starken Säuren bis zu einem pH von 2 bis 8,
b) anschließend enzymatische Veresterung mit einer Lipase in einer Konzentration im Bereich von 100 ppm bis 10 Gew.-%, wobei C1-C6 Alkanole in einem Gewichtsverhältnis von 5 bis 100 % im Verhältnis zu den Fettkomponenten bei Temperaturen von 15 bis 70° C batchweise oder kontinuierlich eingesetzt werden,
c) die Mischung wird 3 bis 5 Tagen bei Temperaturen zwischen 15 und 70° C mechanisch gerührt oder geschüttelt; Die Säurezahl wird in der organischen Phase während dieser Zeit gemessen. Die Reaktion wird beendet wenn die Säurezahl nach 24 Stunden nicht mehr absinkt,
d) Abtrennung der Esterphase durch Absetzen der Mischung, pumpen in eine Zentrifuge oder die Feststoffe werden herausfiltriert,
e) die verbleibende Säurezahl der unvollständigen enzymatischen Veresterung wird neutralisiert, wobei eine alkalische Lösung ausgewählt aus der Gruppe bestehend aus Natrium, Kalium, Kalzium, Aluminium, Litium oder Ammoniumhydroxid und deren Derivaten wie organischen Aminen verwendet wird,
f) die rohen Ester werden mittels Batch oder kontinuierlicher Destillation destilliert, wobei der restlicher Anteil an Feuchtigkeit oder Methanol mit einem Entgaser vor der Hauptdestillation entfernt wird und 80 bis 90 % eines hellfarbigen Produkts kontinuierlich erhalten werden.

2. Ein Verfahren gemäß Anspruch 1, **dadurch gekennzeichnet, dass** die Seifengrundlage aus dem alkalischen Veredelungsprozess ausgewählt sind aus der Gruppe der Sojabohnen, Sonnenblumen, Reis, Weizen, Kokosnuss, Palmkern, Raps oder Baumwolle.

3. Ein Verfahren gemäß den Ansprüchen 1 oder 2, **dadurch gekennzeichnet, dass** die Säuren zur Trennung der Seifen starke Säuren wie Schwefelsäure oder Salzsäure sind und der bevorzugte pH bei pH 3,5 bis 6 und besonders bevorzugt bei pH 5 liegt.

4. Ein Verfahren gemäß einem der Ansprüche 1 bis 3, **dadurch gekennzeichnet, dass** die Lipase erzeugtt wird durch einen Organismus ausgewählt aus der Gruppe, enthaltend *Aspergillus niger, Aspergillus oryzea, Bacillus species, Candida albicans, Candida antarctica, Candida cylindracea, Candida glabrata, Candida maltosa, Candida parapsilosis, Candida lipolytica, Candida tropicalis, Candida viswanathii, Chromobacterium viscosum, Geotrichum candidum, Issatchenkia orientalis (Candida krusei), Kluyveromyces marxianus (C. kefyr, C. pseudotropicalis), Mucor javanicus, Penicilium camenberti, Penicilium roqueforti, Pichia guilliermondii (Candida guilliermondii), Porcine pancreas, Pseudomonas cepacia, Pseudomonas fluorescens, Rhizomucor miehei, Rhizopus arrhizus, Rhizopus oryzae, Rhizopus niveus, Rhizopus javanicus and Thermomyces lanugenosus* fest oder immobilisiert in Form einer Lösung.

5. Ein Verfahren gemäß Anspruch 4, **dadurch gekennzeichnet, dass** die Lipase eine Lipase des Types B, vorzugsweise Candida Antarktika Lipase B ist.

6. Ein Verfahren gemäß der Ansprüche 1 bis 5, **dadurch gekennzeichnet, dass** das Alkanol ein linear oder verzweigter C1-C6 Alkohol ist, vorzugsweise Methanol oder Ethanol in einem Batch oder kontinuierlichen Verfahren.

7. Ein Verfahren gemäß einem der Ansprüche 1 bis 6, **dadurch gekennzeichnet, dass** im Destillationsschritt f) die batchweise oder kontinuierliche Destillation in einem Dünnfilm- oder Wischfilmverdampfer durchgeführt wird und das die kontinuierliche Destillation bei 180 bis 240° C bei 1 bis 10 mm hg Druck, vorzugsweise 220° C und 3 mm hg durchgeführt wird.

8. Ein Verfahren gemäß den Ansprüchen 1 bis 7, **dadurch gekennzeichnet, dass** der Rest 5 bis 8 % Sterole enthält.

9. Ein Verfahren zur Herstellung von Biodieseln, wobei ein Prozess gemäß einem der Ansprüche 1 bis 8 eingesetzt wird.

## Revendications

1. Procédé pour produire des esters d'acides gras directement à partir de n'importe quelle pâte de neutralisation générée dans un procédé de raffinage alcalin qui contient 10-60 % d'eau, 0,1-2,0 % de stérols et 35-85 % de dérivés gras incluant des glycérides partiels, par
a) neutralisation et dissociation des savons avec des acides forts jusqu'à atteindre un pH de 2-8,
b) suivies d'une estérification enzymatique utilisant une lipase à une concentration allant de 100 ppm à 10 % en poids, en employant un alcool en C1 à C6 dans un rapport pondéral de 5-100 % par rapport aux composants gras et en travaillant à une température de 15-70°C avec des procédés discontinus ou continus,
c) le mélange est agité mécaniquement ou simplement par circulation durant trois à cinq jours à une température de 15-70°C. L'indice d'acide est mesuré dans la couche organique au fil des jours. La réaction est interrompue quand l'indice d'acide ne diminue plus après 24 heures,
d) pour séparer la phase ester, le mélange est décanté, pompé jusqu'à une centrifugeuse, ou bien les matières solides sont filtrées pour faciliter la séparation,
e) l'indice d'acide résiduel de l'estérification enzymatique incomplète est neutralisé en utilisant une solution alcaline choisie dans le groupe constitué par les hydroxydes de sodium, potassium, calcium, aluminium, lithium et ammonium et leurs dérivés tels que des amines organiques,
f) les esters bruts sont extraits par distillation en utilisant une technique discontinue ou des distillateurs éclairs continus, la quantité résiduelle d'humidité ou de méthanol est extraite en utilisant un dégazeur juste avant la distillation principale, jusqu'à 80 à 90 % d'esters de couleur claire sont produits en continu.

2. Procédé selon la revendication 1, **caractérisé en ce que** la pâte de neutralisation issue du raffinage alcalin est choisie dans le groupe constitué par le soja, le tournesol, le riz, le maïs, la noix de coco, la noix de palme, la graine de colza et le coton.

3. Procédé selon la revendication 1 ou 2, **caractérisé en ce que** les acides utilisés pour dissocier les savons sont des acides forts comme l'acide sulfurique ou l'acide chlorhydrique et le pH préféré est de 3,5-6, idéalement 5.

4. Procédé selon l'une quelconque des revendications 1 à 3, **caractérisé en ce que** la lipase est produite par un organisme choisi dans le groupe constitué par *Aspergillus niger, Aspergillus oryzae, Bacillus spp., Candida albicans, Candida antarctica, Candida cylindracea, Candida glabrata, Candida maltosa, Candida parapsilosis, Candida lipolytica, Candida tropicalis, Candida viswanathii, Chromobacterium viscosum, Geotrichum candidum, Issatchenkia orientalis (Candida krusei), Kluyveromyces marxianus (C. kefyr, C. pseudotropicalis), Mucor javanicus, Penicillium camenberti, Penicillium roqueforti, Pichia guilliermondii (Candida guilliermondii*), le pancréas de porc, *Pseudomonas cepacia, Pseudomonas fluorescens, Rhizomucor miehei, Rhizopus arrhizus, Rhizopus oryzae, Rhizopus niveus, Rhizopus javanicus* et *Thermomyces lanugenosus*, et les mélanges de ceux-ci, chacun sous la forme d'un liquide, en masse ou immobilisé.

5. Procédé selon la revendication 4, **caractérisé en ce que** la lipase est une lipase de type B, de préférence la lipase B de *Candida antartica*.

6. Procédé selon l'une quelconque des revendications 1 à 5, **caractérisé en ce que** l'alcool est un alcool en C1 à C6 linéaire ou ramifié, de préférence le méthanol en C1 ou l'éthanol en C2, en utilisant une technique discontinue ou continue.

7. Procédé selon l'une quelconque des revendications 1 à 6, **caractérisé en ce que** l'étape de distillation f) est exécutée par une opération discontinue ou continue, de préférence avec un évaporateur à couche mince ou à film raclé, et **en ce qu'**une distillation continue est effectuée à 180°C - 240°C à une pression de 1-10 mm Hg, de préférence à 220°C et 3 mm Hg.

8. Procédé selon l'une quelconque des revendications 1 à 7, **caractérisé en ce que** le résidu comporte 5-8 % de stérols.

9. Procédé pour la production de biodiesel comprenant le procédé selon l'une quelconque des revendications 1 à 8.
